# EUROPEAN PATENT APPLICATION

(11) **EP 3 705 362 A1**
(43) Date of publication of application: **09.09.2020**
(21) Application number: 18874312.4
(22) Date of filing: 27.04.2018
(51) Int. Cl.: B60S 5/06

(54) **SPRING SUSPENSION CHAIN TYPE FLOATING DEVICE**

(30) Priority: 30.10.2017 CN 201711033786
(71) Applicant: Nio Nextev Limited, Central, Hong Kong (CN)
(72) Inventor: BENGTSSON, Jan, Shanghai 201804 (CN); LI, Nan, Shanghai 201804 (CN); TIAN, Xiaotao, Shanghai 201804 (CN); DING, Xikun, Shanghai 201804 (CN); MA, Yongyue, Shanghai 201804 (CN)
(74) Representative: Vossius & Partner Patentanwälte Rechtsanwälte mbB
(86) International application number: PCT/CN2018/084886
(87) International publication number: WO 2019/085417

(57) **Abstract**

A spring and suspension chain-type floating device comprises a fixed base plate (1), a floating plate (2), suspension columns (3) and connecting portions (4), wherein the fixed base plate (1) and the floating plate (2) are arranged face to face with a floating gap therebetween, and the floating plate (2) is used to support a target object; the fixed base plate (1) is provided with one or more pairs of suspension columns (3), each pair of suspension columns (3) being arranged face to face on an edge of the floating plate (2); and one end of the connecting portion (4) is connected to the suspension column (3) and the other end thereof is connected to the floating plate (2), and the connecting portion (4) allows the floating plate (2) to float relative to the fixed base plate (1). The floating plate can realize X-axis, Y-axis and Z-axis floating, has a large floating amount and a large load-bearing capacity, can be restored and centered, and can perform position locking, so that a battery swap system can be accurately positioned.

## Description

### Technical Field

The invention relates to the technical field of battery swapping for an electric vehicle, and in particular to a spring and suspension chain-type floating device.

### Background Art

With the popularization of electric vehicles, how to provide electric energy replenishment for an electric vehicle with insufficient electric power in time and efficiently has become a major concern for both manufacturers and vehicle owners. By means of the establishment of a battery swap system for battery swapping of the electric vehicle, i.e., directly swapping a completely drained traction battery for a fully charged traction battery, the replenishment of electric energy can be completed within minutes, so that battery swapping is a very efficient way for replenishing electric energy.

In the process of battery swapping by means of the battery swap system, a battery pack at the bottom needs to be swapped accurately, and therefore, the position of the vehicle or a battery swap trolley needs to be adjusted. However, when the vehicle or the battery swap trolley, etc., is positioned and adjusted, it is inevitable that there will be errors. In order to perform the positioning and aligning operations smoothly, it is desirable that a target object can float freely, that is, the contact face between the battery swap trolley and the battery pack and the support face of the battery swap trolley in contact with the vehicle are floatable, which is realized often by means of a floating device. However, the existing floating device has a small floating range, may not float when subjected to a load, and may not be restored after floating. Therefore, it is very difficult to achieve accurate positioning in the battery swap system, which makes it difficult to accurately and efficiently perform a battery swap process.

### Summary of the Invention

The technical problem to be solved by the invention is to provide a spring and suspension chain-type floating device for use in a battery swap trolley, wherein the floating device can realize X-axis, Y-axis and Z-axis floating, has a large floating amount and a large load-bearing capacity, can be restored and centered, and can perform position locking, so that a battery swap system can be accurately positioned.

In order to solve the above technical problem, according to an aspect of the invention, provided is a spring and suspension chain-type floating device, which comprises:
a fixed base plate, a floating plate, suspension columns and connecting portions, wherein
the fixed base plate and the floating plate are arranged face to face with a floating gap therebetween, and the floating plate is used to support a target object;
the fixed base plate is provided with one or more pairs of suspension columns, each pair of suspension columns being arranged face to face on an edge of the floating plate; and
one end of the connecting portion is connected to the suspension column and the other end thereof is connected to the floating plate, and the connecting portion allows the floating plate to float relative to the fixed base plate.

Further, one end of the suspension column is provided with a cross bar, and one end of the connecting portion is connected to the cross bar; and
the other end of the suspension column is fixedly connected to the fixed base plate.

Further, the connecting portion comprises a suspension chain, and two ends of the suspension chain are respectively connected to the cross bar and the floating plate.

Further, the connecting portion further comprises a suspension shaft extending in a lengthwise direction of the suspension chain;
the cross bar is internally provided with a shaft hole through which the suspension shaft passes, and the end, away from the floating plate, of the suspension chain is connected to the suspension shaft; and
the suspension shaft is axially movable in the shaft hole to allow the floating plate to float towards or away from the fixed base plate within the floating gap.

Further, The end, facing away from the suspension chain, of the suspension shaft extends out of the cross bar, an elastic component is fitted over an extension, and the elastic component is able to be compressed when the suspension shaft moves towards the fixed base plate, and provides a restoring force.

Further, the elastic component comprises one or more springs.

Further, the device further comprises a locking portion for locking the floating plate when the target object is adjusted to a target position.

Further, the device comprises a plurality of locking portions evenly distributed in a circumferential direction around the floating plate.

Further, the locking portion is an electromagnetic brake attraction plate which is arranged above the floating plate and oriented in a direction toward the fixed base plate, a through hole corresponding to the brake attraction plate is provided in the floating plate, and during locking, the brake attraction plate passes through the through hole to attract the fixed base plate, so as to lock the floating plate.

According to another aspect of the invention, provided is a battery swap trolley which comprises the spring and suspension chain-type floating device.

The invention has obvious advantages and beneficial effects as compared with the prior art. By means of the above technical solutions, the spring and suspension chain-type floating device of the invention can achieve considerable technical progress and practicality, has a wide range of industrial utility value, and has at least the following advantages:
(1) the floating device is simple in structure, can float in X, Y and Z directions, and can be used to position and align a target in a battery swap system to eliminate the influence of positional errors; and
(2) the floating device has a large floating amount and a large load-bearing capacity, can be restored, and can perform position locking, thereby increasing the positioning precision.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a schematic diagram of a spring and suspension chain-type floating device provided in an embodiment of the invention.
Fig. 2 is a sectional view taken along line A-A of Fig. 1.

### [Description of Symbols]

| | |
|---|---|
| 1: Fixed base plate | 2: Floating plate |
| 3: Suspension column | 4: Connecting portion |
| 5: Floating gap | 6: Cross bar |
| 7: Suspension chain | 8: Suspension shaft |
| 9: Elastic component | 10: Chain bolt |
| 11: Locking portion | |

### Detailed Description of Embodiments

In order to further illustrate the technical means used to achieve the intended purpose of the invention and the technical effects of the invention, the implementation of a spring and suspension chain-type floating device proposed in the invention and the effects thereof are described in detail hereinafter in conjunction with the accompanying drawings and the preferred embodiments.

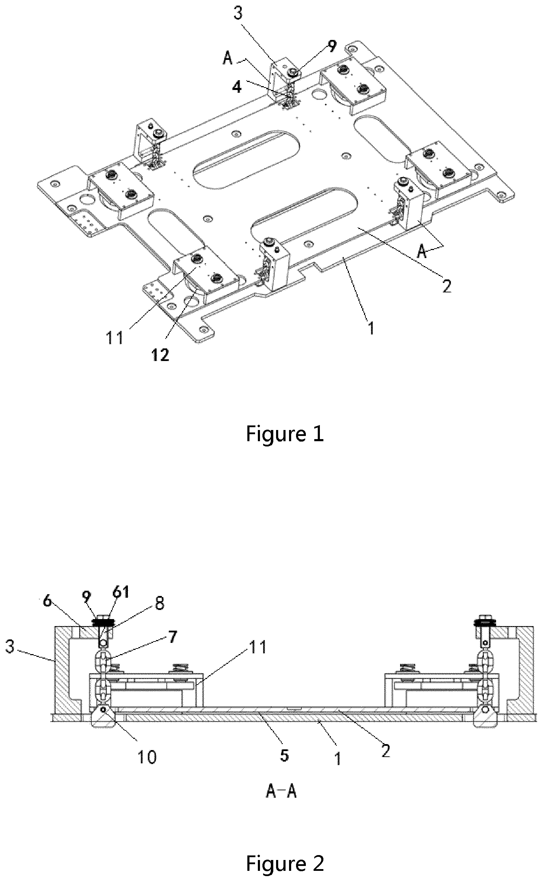

The invention provides a spring and suspension chain-type floating device, as shown in Figs. 1 and 2, comprising:
a fixed base plate 1, a floating plate 2, suspension columns 3 and connecting portions 4, wherein the fixed base plate 1 and the floating plate 2 are arranged face to face with a floating gap 5 therebetween, and the floating plate 2 is used to support a target object. The target object is an object to be aligned or positioned. For example, when the floating device is applied to a battery swap trolley in a battery swap system, the target object is a battery pack. The fixed base plate 1 is provided with one or more pairs of suspension columns 3, the bottom end of the suspension column 3 is fixedly connected to the fixed base plate 1 by means of welding connection, bolted connection, etc. Each pair of suspension columns 3 is arranged face to face on an edge of the floating plate 2. One end of the connecting portion 4 is connected to the suspension column 3 and the other end thereof is connected to the floating plate 2, and the connecting portion 4 allows the floating plate 2 to float relative to the fixed base plate 1.

It is assumed that the horizontal direction is the X-axis, the direction perpendicular to the X-axis direction in a horizontal plane is the Y-axis, and the vertical direction is the Z-axis. The connecting portion 4 allows the floating plate 2 to float relative to the fixed base plate 1, realizing the floating in the X-axis and Y-axis directions. The floating gap 5 prevents the floating plate 2 from making contact with the fixed base plate 1 when the floating plate floats relative to the fixed base plate 1. The size of the floating gap 5 is determined according to factors such as the load-bearing capacity to the target object and the maximum range of the target object floating in the X-axis, Y-axis and Z-axis. The preferred range of the size of the floating gap 5 is from 1 mm to 20 mm, and in this embodiment, the floating gap 5 is set to be 10 mm.

When the target object on the floating plate 2 is not subjected to any external force or the target object is removed from the floating plate, the floating plate 2 will return to an initial position by its own weight to realize restoring in the X-axis and Y-axis directions. When the next target object is placed on the floating plate 2 to float in the X-axis and Y-axis directions, the floating device will maintain the original floating amount.

One end of each suspension column 3 is provided with a cross bar 6, and one end of the connecting portion 4 is connected to the cross bar 6; and the other end of the suspension column 3 is fixedly connected to the fixed base plate 1.

The connecting portion 4 comprises a suspension chain 7, and two ends of the suspension chain 7 are respectively connected to the cross bar 6 and the floating plate 2. The connecting portion 4 further comprises a suspension shaft 8 extending in the lengthwise direction of the suspension chain 7; the cross bar 6 is internally provided with a shaft hole 61 through which the suspension shaft 8 extends, and the end, away from the floating plate 2, of the suspension chain 7 is connected to the suspension shaft 8; and the suspension shaft 8 is axially movable in the shaft hole 61 to allow the floating plate 2 to float towards or away from the fixed base plate 1 within the floating gap 5, thereby realizing floating in the Z-axis direction.

The end, facing away from the suspension chain 7, of the suspension shaft 8 extends out of the cross bar, an elastic component 9 is fitted over an extension, and the elastic component 9 is able to be compressed when the suspension shaft 8 moves towards the fixed base plate 1, and provides a restoring force, so as to restore the floating plate 2 in the Z-axis direction. In some examples, in order to better achieve the compression of the elastic component 9 along with the downward movement of the suspension shaft 8, an upper end of the elastic component 9 may be fixed on the suspension shaft 8, or a nut or other stop member, etc., may be provided at an upper end of the suspension shaft 8. The elastic component 9 is provided to be able to counterbalance the weight of a suspended object, and to achieve the floating of the suspended object in the Z-axis. The suspended object comprises the floating plate 2 and the target object.

In some examples, the connecting portion 4 further comprises a suspension chain bolt 10. The chain bolt 10 is arranged on the floating plate 2. The suspension chain 9 is connected to the chain bolt 10 at one end and is connected to the floating plate 2 via the chain bolt 10.

In some examples, two pairs of suspension columns 3 are arranged on the fixed base plate 1, and the center of gravity of the suspended object is at the center of the area surrounded by the four suspension columns 3. The number of the suspension columns 3 is not limited to 4, and any arrangement enabling the floating plate to float in the X-axis, Y-axis and Z-axis directions is applicable here.

In some examples, the elastic component 9 comprises one or more springs arranged in the vertical direction, one or more of which are superposed together. The elastic coefficient of the spring may be selected according to factors such as the floating amount and the load-bearing capacity of the floating device. In addition, according to the parameters of the selected spring, the weight of the target object can be determined according to the amount of deformation of the spring so as to control a hoisting force.

In some examples, the device further comprises a locking portion 11. One or more locking portions 11 may be provided for locking the floating plate 2 when the target object is adjusted to a target position, so that the floating plate 2 cannot move relative to the fixed base plate 1, so as to perform corresponding operations on the target object. For example, the device is arranged on the battery swap trolley, and after the position of the battery pack is aligned with the battery swap position, the floating plate 2 is locked by means of the locking portion 11, and in turn the position of the battery pack is also fixed, and then the battery swap operation can be performed. The battery swapping precision and accuracy of the battery swap system are increased by means of the device.

In some examples, the device comprises four locking portions 11 evenly distributed around the floating plate 2 in the circumferential direction so as to keep the floating plate 2 in a stable state during locking, to prevent slight movement of the target object and to improve the positioning and aligning accuracy of the target object to further improve the accuracy of the battery swap process.

The locking portion 11 may be an electromagnetic brake attraction plate arranged above the floating plate 2. The brake attraction plate faces the fixed base plate 1, and the fixed base plate 1 serves as an attraction face of the brake attraction plate. The floating plate 2 is provided with a through hole 12 corresponding to the brake attraction plate. During locking, the brake attraction plate passes through the through hole to attract the fixed base plate 1, so as to lock the floating plate 2. The electromagnetic brake attraction plate can be controlled to attract or release the fixed base plate 1 by means of powering on or off the electromagnetic brake attraction plate. In the released state, the locking portion 11 floats along with the floating of the floating plate 2. The electromagnetic brake attraction plate can be directly selected from the existing finished products, so the specific structural components thereof are not to be described in detail herein.

It should be noted that the locking portion 11 using the electromagnetic brake attraction plate is only a preferred embodiment, and other locking portions may be used in other embodiments, as long as the floating plate 2 can be locked when the target object reaches a pre-set position.

The embodiment of the invention further provides a battery swap trolley. The battery swap trolley comprises the spring and the suspension chain-type floating device. During battery swapping, the battery pack is placed on the floating device. If the battery swap position is not accurate, the battery pack is pushed to drive the floating plate to float in the X-axis, Y-axis and Z-axis directions, thereby adjusting the position of the battery pack.

The floating device of the embodiment of the invention is simple in structure, can float in X, Y and Z directions, has a large floating amount and a large load-bearing capacity, can be restored, and can perform position locking, thereby increasing the positioning precision. The floating device can be used to position and align a target in a battery swap system to eliminate the influence of positional errors, thereby increasing the efficiency and accuracy of the battery swap system.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A spring and suspension chain-type floating device, **characterized by** comprising:
a fixed base plate, a floating plate, suspension columns and connecting portions, wherein
the fixed base plate and the floating plate are arranged face to face with a floating gap therebetween, and the floating plate is used to support a target object;
the fixed base plate is provided with one or more pairs of suspension columns, each pair of suspension columns being arranged face to face on an edge of the floating plate; and
one end of the connecting portion is connected to the suspension column and the other end thereof is connected to the floating plate, and the connecting portion allows the floating plate to float relative to the fixed base plate.

2. The spring and suspension chain-type floating device according to claim 1, **characterized in that**
one end of the suspension column is provided with a cross bar, and one end of the connecting portion is connected to the cross bar; and
the other end of the suspension column is fixedly connected to the fixed base plate.

3. The spring and suspension chain-type floating device according to claim 2, **characterized in that**
the connecting portion comprises a suspension chain, and two ends of the suspension chain are respectively connected to the cross bar and the floating plate.

4. The spring and suspension chain-type floating device according to claim 3, **characterized in that** the connecting portion further comprises a suspension shaft extending in a lengthwise direction of the suspension chain;
the cross bar is internally provided with a shaft hole through which the suspension shaft passes, and the end, away from the floating plate, of the suspension chain is connected to the suspension shaft; and
the suspension shaft is axially movable in the shaft hole to allow the floating plate to float towards or away from the fixed base plate within the floating gap.

5. The spring and suspension chain-type floating device according to claim 3, **characterized in that**
the end, facing away from the suspension chain, of the suspension shaft extends out of the cross bar, an elastic component is fitted over an extension, and the elastic component is able to be compressed when the suspension shaft moves towards the fixed base plate, and provides a restoring force.

6. The spring and suspension chain-type floating device according to claim 4, **characterized in that**
the elastic component comprises one or more springs.

7. The spring and suspension chain-type floating device according to claim 1, **characterized in that**
the device further comprises a locking portion for locking the floating plate when the target object is adjusted to a target position.

8. The spring and suspension chain-type floating device according to claim 7, **characterized in that**
the device comprises a plurality of locking portions evenly distributed in a circumferential direction around the floating plate.

9. The spring and suspension chain-type floating device according to claim 7, **characterized in that**
the locking portion is an electromagnetic brake attraction plate which is arranged above the floating plate and oriented in a direction toward the fixed base plate, a through hole corresponding to the brake attraction plate is provided in the floating plate, and during locking, the brake attraction plate passes through the through hole to attract the fixed base plate, so as to lock the floating plate.

10. A battery swap trolley, **characterized in that** the battery swap trolley comprises the spring and suspension chain-type floating device as claimed in any one of claims 1-9.
